(19) **Europäisches Patentamt / European Patent Office / Office européen des brevets**

(11) **EP 4 726 368 A1**

(12) # EUROPEAN PATENT APPLICATION

(43) Date of publication:
**15.04.2026 Bulletin 2026/16**

(21) Application number: **24206014.3**

(22) Date of filing: **11.10.2024**

(51) International Patent Classification (IPC):
**G01N 21/31** (2006.01)     **G01N 21/43** (2006.01)
**H01M 8/18** (2006.01)     **G01N 21/3577** (2014.01)
**H01M 8/04186** (2016.01)     **G01N 21/359** (2014.01)
**G01N 21/41** (2006.01)

(52) Cooperative Patent Classification (CPC):
**G01N 21/31; G01N 21/43; H01M 8/04194;**
**H01M 8/188;** G01N 21/3577; G01N 21/359;
G01N 21/4133; G01N 2021/3181; G01N 2201/0627

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **VoltStorage GmbH**
**80935 München (DE)**

(72) Inventors:
• **Ackermann, Tobias Nils**
  **80997 München (DE)**
• **Seitzl, Julia**
  **81667 München (DE)**
• **Hernandez Sanchez, Nicolas Kinich**
  **80336 München (DE)**

(74) Representative: **Grünecker Patent- und**
**Rechtsanwälte**
**PartG mbB**
**Leopoldstraße 4**
**80802 München (DE)**

(54) **OPTICAL SENSOR FOR IRON SALT BATTERY OPERATION**

(57) The invention provides a sensor for an iron salt battery, ISB, the sensor comprising: a light emitting device (10) configured to emit light at one or more wavelengths in the UV-Vis-IR range or one or more sub-ranges within the UV-Vis-IR range; a light detecting device (20) configured to detect light emitted by the light emitting device and having passed through ISB electrolyte (60); and an analyzing device (40) configured to determine at least one of a Fe(II) concentration, a Fe(III) concentration, or a ratio of Fe(III)/Fe(II) concentrations of the ISB electrolyte based on an intensity of the light emitted by the light emitting device and an intensity of the light detected by the light detecting device.

EP 4 726 368 A1

**FIG. 1**

## Description

### Field of the Invention

The invention relates to a sensor for an iron salt battery and a related method.

### Prior Art

Different redox flow batteries are known in the art. A particular type is the iron salt battery (ISB) which has the advantage of being cost efficient due to using only iron in different oxidation states as the electrolyte. It comprises two tanks (positive and negative tank), which in the uncharged state store electrolytes of dissolved Fe(II) ions. The electrolyte is pumped into the battery cell which includes two separated half-cells. The base electrolyte comprises Fe(II) salts which are dissolved in water, where Cl⁻ ions can be used as counter ions. Fe(II) chloride is preferred since the conductivity thereof is high. The solution of hydrochloric acid, HCl, may have a pH value less than 1.

Electrolyte in the positive tank (positive electrolyte) is pumped through the positive half-cell and back to the positive tank, and electrolyte in the negative tank (negative electrolyte) is pumped through the negative half-cell and back to the negative tank. The electrochemical reaction takes place at the electrodes within each half-cell. The half-cells are separated by a separator. This can be an anionic exchange membrane, a cationic exchange membrane or a porous separator.

The energy storage is based on the electrochemical reaction of iron. During charge, Fe(II) oxidizes to Fe(III) in the positive half-cell while in the negative half-cell Fe(II) is reduced to Fe(0). The latter reaction in the negative half-cell is also called the plating reaction, as Fe(0) is deposited on the negative electrode. During discharge, the plated Fe(0) is dissolved into the electrolyte forming Fe(II), while Fe(III) reduces to Fe(II) in the positive half-cell.

Specifically, an iron salt battery utilizes the following chemistry in order to store electrical energy:

Positive half-cell:

$$Fe^{2+} \rightarrow Fe^{3+} + e^-$$

$$E° = +0.77 \text{ V (vs. SHE)}$$

Negative half-cell:

$$Fe^{2+} + 2\ e^- \rightarrow Fe^0_{(s)}$$

$$E° = -0.44 \text{ V (vs. SHE)}$$

Here SHE refers to a standard hydrogen electrode. The SHE is an electrode that utilizes the redox reaction between hydrogen gas and hydrogen ions in solution. It is given a potential of exactly 0 volts, and all other electrode potentials are measured relative to this value.

In addition, during charge, hydrogen may evolve due to the hydrogen evolution reaction (HER) at the negative half-cell. The acidic protons $H^+$ in solution react to form hydrogen gas via $H^+ + e^- \rightarrow \frac{1}{2} H_2$ (g). The HER is pH dependent. At lower pH values, the concentration of $H^+$ is high, which increases the kinetics of the side reaction.

Positive electrolyte will contain iron in different oxidations states at a varying ratio of $Fe^{3+}/Fe^{2+}$. The ratio of $Fe^{3+}$ to the total concentration of iron is defined as the state of charge (SOC). In other words:

$$SOC = [Fe(III)]/([Fe(II)] + [Fe(III)])$$

where [Fe(III)] and [Fe(II)] refer to the concentrations of Fe(III) and Fe(II), respectively.

Positive electrolyte having only $Fe^{2+}$ and no $Fe^{3+}$ (uncharged state) has a SOC=0, while electrolyte having only $Fe^{3+}$ and no $Fe^{2+}$ (fully charged state) has a SOC=1.

Negative electrolyte will initially contain a maximum concentration of $Fe^{2+}$ which decreases with increasing state of charge (SOC) due to plating (reduction to metallic iron) in the negative half-cell of the stack.

Thus, the concentration of $Fe^{2+}$ in the negative electrolyte may be considered an alternative definition of SOC (as well as the thickness of the layer of plated $Fe^0$, for that matter)

However, suitable methods and apparatuses for measurement of the SOC are desirable. In particular, a simple, cost-efficient and easy to implement measurement of SOC during operation of an ISB is missing, but would be useful to adjust operating conditions of the ISB.

**Description of the Invention**

It is the object of the present invention to overcome or alleviate at least some of the above mentioned disadvantages. The present application describes a method and a sensor for determining at least one of a Fe(II) concentration, a Fe(III) concentration, or a ratio of Fe(III)/Fe(II) concentrations of the ISB electrolyte based on optical measurements. Based on these measurements, the SOC of the ISB electrolyte can be determined. Moreover, the pH of the electrolyte may be determined.

The main objective for this optical characterization of ISB electrolyte using UV-Vis-IR (ultraviolet-visible-infrared) spectrometry is to identify spectral features specific to or different in the presence of $Fe^{2+}$ or $Fe^{3+}$ or both, respectively. If identified, such features may allow the development of optical sensors tailored specifically towards the measurement of SOC in the context of an ISB.

Furthermore, a characterization of the influence of pH on such spectral features identified for $Fe^{2+}$ may allow to determine when to regulate pH in a running system.

This object is achieved by a sensor according to independent claim 1.

Claim 1 provides a sensor for an iron salt battery, ISB, the sensor comprising: a light emitting device configured to emit light at one or more wavelengths in the UV-Vis-IR range or one or more sub-ranges within the UV-Vis-IR range; a light detecting device configured to detect light emitted by the light emitting device and having passed through ISB electrolyte; and an analyzing device configured to determine at least one of a Fe(II) concentration, a Fe(III) concentration, or a ratio of Fe(III)/Fe(II) concentrations of the ISB electrolyte based on an intensity of the light emitted by the light emitting device and an intensity of the light detected by the light detecting device.

Light emitted by the light emitting device is attenuated (absorbed and/or scattered) by the ISB electrolyte, in particular by Fe(II) and/or Fe(III) therein, such that the amount of light received by the light detecting device is changed when compared to an initial state. A degree of reduction of the light intensity may depend on the concentration of these species in the electrolyte. Therefore, the respective concentration(s) or ratio can be determined by the analyzing device.

According to a development of the sensor according to the invention, the analyzing device may be configured to receive a signal from the light emitting device corresponding to the light intensity emitted by the light emitting device and a signal from the light detecting device corresponding to the light intensity detected by the light detecting device.

In an alternative development, the analyzing device may be configured to send a signal to the light emitting device to trigger light emission with a specific intensity and wavelength and may receive a signal from the light detecting device corresponding to the light intensity detected by the light detecting device.

In addition or alternatively, the analyzing device may be configured to receive a reference signal corresponding to the detected light intensity when the ISB is discharged and/or fully charged, such that the discharged and/or fully charged ISB electrolyte can be a reference solution.

The signals may be generated by the respective light emitting device and light detecting device, which can be analyzed by the analyzing device, e.g. a microprocessor.

According to another development, the analyzing device may be configured to determine the Fe(II) concentration based on light having a wavelength of at least one of $742\pm77.5$, $876\pm68$, $946\pm53$ and $979\pm27.5$ nm and for each wavelength a respective linear relationship between an absorbance value and the Fe(II) concentration, wherein the absorbance value is calculated based on the light intensity detected by the light detecting device and the light intensity detected by the light detecting device when the ISB is discharged and/or fully charged.

Since the wavelength range(s) of at least one of $742\pm77.5$, $876\pm68$, $946\pm53$ and $979\pm27.5$ nm correspond to a respective linear relationship between an absorbance value and the Fe(II) concentration, the Fe(II) concentration can be determined easily.

This can be further developed in that the light detecting device may be configured to detect light having passed through negative ISB electrolyte.

In particular, the linear relationship for the mentioned wavelength range(s) can be used for the negative ISB electrolyte (including only Fe(II)).

In another development, the analyzing device may be configured to determine the Fe(III) concentration based on a light wavelength at which an absorbance spectrum drops from a saturated value to lower values at greater wavelengths, in particular between 400 and 600 nm.

The light attenuation (through the electrolyte) may be saturated (optically thick) in a particular wavelength range, but may drop to an unsaturated (optically thin) attenuation at a greater wavelength at the upper end of this range and above. This wavelength of transition from saturated to unsaturated attenuation (from little to no transmission to some or complete transmission) depends on the concentration of Fe(III) and can thus be used to determine [Fe(III)].

According to a further development, the light emitting device and the light detecting device may be configured to be arranged on opposite sides of a transparent flow line for the ISB electrolyte.

A portion of the ISB electrolyte may be sidelined and flow through a transparent flow line, if the main flow line cannot be transparent or is otherwise not suitable for the measurement. Since the attenuation of the light emitted by the light emitting device is proportional to concentration but also to the path length through the electrolyte, one reason for a main flow line being unsuitable can be its size. Too small a flow line may lead to a break from the linear relationship for low concentrations of $Fe^{2+}$ (high SOC), too big a flow line may lead to a break from the linear relationship for high concentrations of $Fe^{3+}$ (low SOC). A break from linear relationship meaning that further changes in concentration cannot be resolved by the sensor. Arranging the light emitting device and the light detecting device on opposite sides of the flow line provides a suitable and simple way to measure absorbed light. In particular, a corresponding arrangement with a reference electrolyte having a known concentration of Fe(II) and/or Fe(III) can be used to compare the transmission of the emitted light as detected by the light detecting device. This can be, for example, ISB electrolyte in a completely uncharged state, containing only Fe(II).

In another development, the sensor may further comprise another light detecting device arranged on the same side of a transparent flow line for the ISB electrolyte as is the light emitting device, wherein at least a portion of the light emitted by the light emitting device is reflected within a wall of the transparent flow line due to total internal reflection, and the another light detecting device is configured to detect at least a portion of the internally reflected light.

Alternatively, the sensor further comprising another light emitting device arranged on the same side of the transparent flow line for the ISB electrolyte as is the light detecting device, wherein at least a portion of the light emitted by said other light emitting device is reflected within a wall of the transparent flow line due to total internal reflection, and the light detecting device is configured to detect at least a portion of the internally reflected light. Accordingly, the sensor may comprise one light detecting device and two light sources, one on the opposite side and one on the same side as the light detecting device. The analyzing device may be configured to coordinate the light emission and detection cycles such that the signals are separated in time.

Such an arrangement makes use of the effect that above a certain critical angle of incidence, when light is passing from a medium with a higher index of refraction to a medium with a lower index of refraction, the light is totally internally reflected.

This may be further developed in that the sensor may be configured to determine a refractive index of the ISB electrolyte, and optionally further configured to determine a pH value of the ISB electrolyte based on the determined refractive index of the ISB electrolyte.

When the medium having the lower index of refraction is the ISB electrolyte, the detected light can be used to determine the index of refraction of the ISB electrolyte. Further, when the index of refraction depends on the pH value, an estimate of the pH value of the ISB electrolyte can be obtained. From that, further conclusions related to the HER, for example, can be drawn.

According to a further development, the light emitting device may be configured to emit white light and the light detecting device may be configured to detect light of selected one or more particular wavelengths.

Here the selection of the wavelengths is at the light receiving side, i.e., the light detecting device. This may be realized by specific filters in front of a photo detector to select the one or more wavelengths or wavelength ranges.

In another development, the light emitting device may be configured to emit selected one or more particular wavelengths and the light detecting device is configured to detect light of the selected one or more particular wavelengths.

The intensity of the light emitting device(s) may be adjusted to fit the range of the light detecting device(s).

The integration time of the light detecting device(s) may be adjusted to fit the intensity of the light emitting device(s).

Here the selection of the wavelengths is at the light emitting side, i.e., the light emitting device. The light detecting device may be a broadband photo detector without wavelength filters.

The invention further provides a method for determining at least one of a Fe(II) concentration, a Fe(III) concentration, and a ratio of Fe(III)/Fe(II) concentrations in an electrolyte of an iron salt battery, ISB, the method comprising: emitting light at one or more wavelengths in the UV-Vis-IR range or one or more sub-ranges within the UV-Vis-IR range; detecting emitted light having passed through ISB electrolyte; and determining at least one of a Fe(II) concentration, a Fe(III) concentration, or a ratio of Fe(III)/Fe(II) concentrations of the ISB electrolyte based on an intensity of the emitted light and an intensity of the detected light.

The advantages of the method according to the invention corresponds to the respective advantages of the sensor according to the invention described above.

The method according to the invention can be developed in that the method may comprise the step of receiving a signal corresponding to the emitted light intensity and a signal corresponding to the detected light intensity. In addition or alternatively, the method may comprise the step of receiving once or periodically a reference signal corresponding to the light intensity when the ISB is discharged and/or fully charged. In addition or alternatively, a reference measurement may be made periodically or continuously at a wavelength that is not or not strongly absorbed. This allows to take into consideration effects of variations in the light intensity and/or variations in turbidity of the ISB electrolyte.

According to another development, the method may further comprise determining the Fe(II) concentration based on light having a wavelength of at least one of $742\pm77.5$, $876\pm68$, $946\pm53$ and $979\pm27.5$ nm and for each wavelength a respective linear relationship between an absorbance value and the Fe(II) concentration, wherein the absorbance value is calculated based on the detected light intensity.

In another development, the method may further comprise determining the Fe(III) concentration based on a light wavelength at which an absorbance spectrum drops from a saturated value to lower values at greater wavelengths, in particular between 400 and 600 nm.

According to a further development, the method may comprise the step of emitting white light and detecting light of selected one or more particular wavelengths; or the step of emitting selected one or more particular wavelengths and detecting light of the one or more selected particular wavelengths.

Further features and exemplary embodiments as well as advantages of the present invention will be explained in greater detail hereinafter with reference to the drawings. It is understood that the specific embodiments do not limit the present invention.

**Brief Description of the Drawings**

Fig. 1    illustrates a first embodiment of the sensor according to the invention.
Fig. 2    illustrates a second embodiment of the sensor according to the invention.
Fig. 3    shows the absorbance spectrum of 2 mol/L $NH_4Cl$ and 0.01 mol/L $HCl$ in aqueous solution measured with DI-water as reference.
Fig. 4    shows the absorbance spectra of standard electrolyte with varying concentration of $Fe^{2+}$.
Fig. 5    shows the deconvolution of $Fe^{2+}$-absorbance-peak by fitting a superposition of Gaussian peaks to the data. The fit parameters for each Gaussian were a: amplitude, c: center-wavelength and w: full-width-at-half-maximum.
Fig. 6    shows the calibration of absorbance values as a function of $Fe^{2+}$-concentration at different wavelengths.
Fig. 7    shows absorbance spectra of negative electrolyte (1.25 mol/L) at varying pH from 200 to 1100 nm.
Fig. 8    shows absorbance spectra of $Fe^{3+}$-solution with varying concentration.
Fig. 9    shows absorbance spectra of undiluted positive electrolyte (2.5 mol/L) at different SOCs.
Fig. 10    shows absorbance spectra of positive electrolyte at varying SOC diluted 1:1 with solvent.
Fig. 11    shows a comparison of absorbance spectra of positive electrolyte at SOC of 0.5 and base-solutions at concentrations of 1.25 mol/L, respectively.

**Embodiments**

The invention is described in detail for the following embodiments with respect to the accompanying drawings.

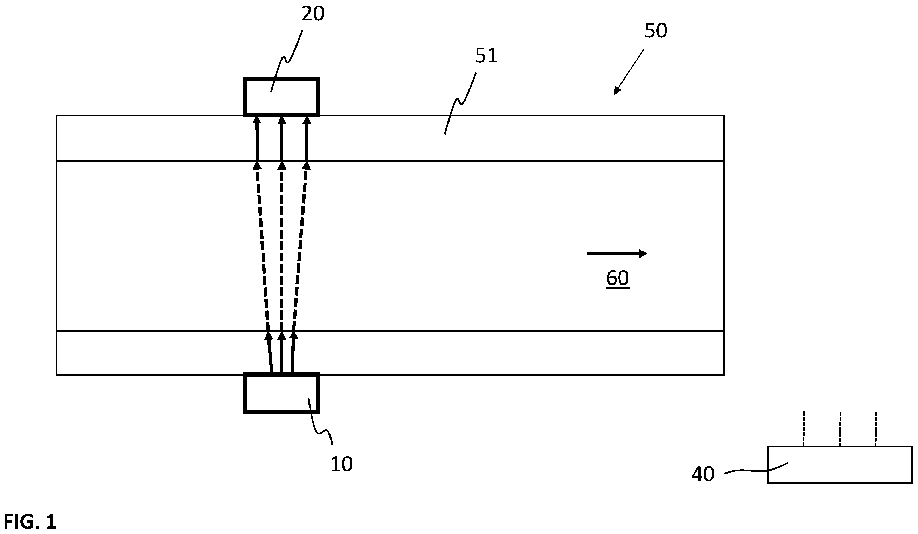

Fig. 1 illustrates a first embodiment of the sensor according to the invention.

The sensor according to the invention comprises a light emitting device 10 configured to emit light at one or more wavelengths in the UV-Vis-IR range or one or more sub-ranges within the UV-Vis-IR range; a light detecting device 20 configured to detect light emitted by the light emitting device 10 and having passed through ISB electrolyte 60; and an analyzing device 40 configured to determine at least one of a Fe(II) concentration, a Fe(III) concentration, or a ratio of Fe(III)/Fe(II) concentrations of the ISB electrolyte 60 based on an intensity of the light emitted by the light emitting device 10 and an intensity of the light detected by the light detecting device 20.

The light emitting device 10 and the light detecting device 20 are arranged on opposite sides of a transparent flow line 50 for the ISB electrolyte 60 having a transparent wall 51, such that light from the light detecting device 20 passing through the electrolyte 60 can be received by the light detecting device 20. For example, the flow line 50 may include positive electrolyte flowing to or from a positive tank of the ISB, or the flow line 50 may include negative electrolyte flowing to or from a negative tank of the ISB.

The light emitting device 10 (e.g. one or more LEDs) may emit white light and the light detecting device 20 may detect light of selected one or more particular wavelengths (for example by use of a filter in front of a photo detector, or by use of a combination of a grating or prism with an array of photodiodes on the detecting side). Alternatively, the light emitting device 10 may emit selected one or more particular wavelengths (for example by use of a filter in front of a broad band light source, e.g. LED, or by using one or more narrow band light sources, e.g. LEDs) and the light detecting device 20 (e.g. photo detector) may detect light of selected one or more particular wavelengths.

The analyzing device 40 receives a signal from the light emitting device 10 corresponding to the light intensity emitted by the light emitting device 10 and a signal from the light detecting device 20 corresponding to the light intensity detected by the light detecting device 20. In another setup the analyzing device 40 sends a signal to the light emitting device 10 to trigger light emission with a specific intensity and wavelength and receives a signal from the light detecting device 20 corresponding to the light intensity detected by the light detecting device 20, i.e. without an actual reading of the emitted intensity. The analyzing device 40 may also receive a reference signal corresponding to the detected light intensity when the ISB is discharged and/or fully charged. The ISB electrolyte in the discharged and/or fully charged state is then a reference solution.

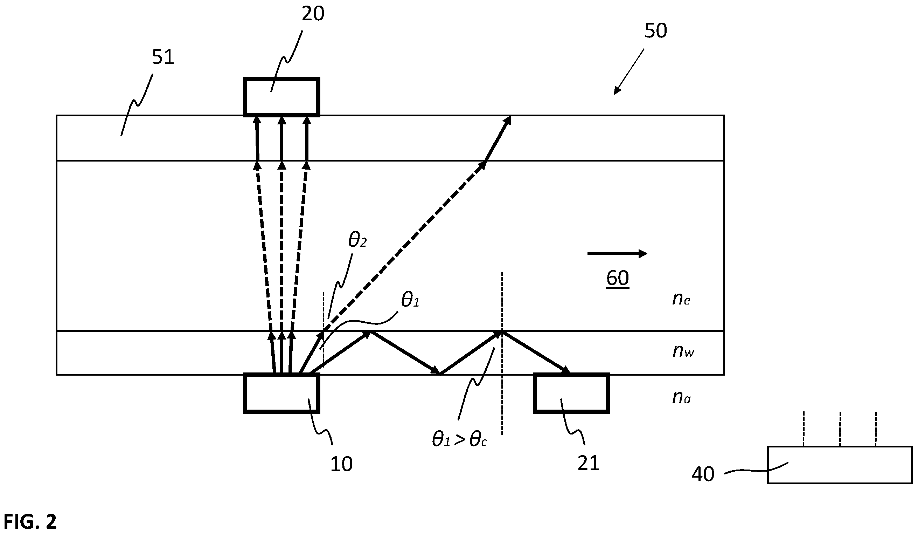

Fig. 2 illustrates a second embodiment of the sensor according to the invention.

The sensor according to this embodiment corresponds to the sensor of Fig. 1, but further comprises another light detecting device 21, which is arranged on the same side of the flow line 50 as the light emitting device 10. In this arrangement the portion of the light emitted by the light emitting device 10 subject to total internal reflection (TIR) within the wall 51 of the flow line 50 is received the by the additional light detecting device 21. The law of refraction reads $n_w \sin \theta_1 = n_e \sin \theta_2$.

Light emitted by the light emitting device 10 covers a range of angles. Light is subject to TIR if the angle of incidence $\theta_1$ is above a critical angle $\theta_c$. For light waves incident from a medium with refractive index $n_1$ to a medium with a refractive index $n_2$, the condition $n_1 > n_2$ applies for TIR. More particularly, here the critical angle is given by:

$$\theta_c = \arcsin (n_e/n_w) \text{ for } n_e < n_w$$

Similarly, for the transition from the wall 51 to the air outside of the flow line 50, the critical angle is given by:

$$\theta_c = \arcsin (n_a/n_w) \text{ for } n_a < n_w$$

The portion of TIR light that enters and exits the wall 51 depends on the ratio of the refractive index $n_w$ of the wall 51 and the refractive index $n_e$ of the electrolyte 60 on the one hand, and the ratio of the refractive index $n_w$ of the wall 51 and the refractive index $n_a$ of air on the other hand. Because the refractive indices $n_w$ of the wall 51 and $n_a$ of the air are constant, the intensity of light received by the additional light detecting device 21 depends on the refractive index $n_e$ of the electrolyte 60. Therefore, the signal of the additional light detecting device 21 is a measure of the refractive index $n_e$ of the electrolyte 60.

In the following, electrolyte preparation and measurement results are described which provide the basis for the sensor according to the invention.

Electrolyte preparation

Solvent:

The solvent used throughout the experiments described here was 2 molar aqueous $NH_4Cl$ (Ammonium-Chloride) solution with 0.01 mol/L hydrochloric-acid with pH ~ 4.4.

Negative electrolyte:

1 L of 2.5 molar electrolyte solution was prepared by dissolving $FeCl_2$ in solvent. The resulting standard electrolyte was treated to reduce all the dissolved iron species to $Fe^{2+}$ (SOC = 0). Subsequently, the pH of the solution was adjusted to $pH = 1$ by adding additional $HCl$ or $NH_4Cl$.

Dilutions were prepared by adding more solvent to the standard electrolyte solution without further adjustment of pH. A 1:1 dilution of standard electrolyte and solvent would thereby result in an $Fe^{2+}$ concentration of 1.25 mol/L, which in terms of negative electrolyte in the ISB represents an SOC of 0.5 (50% charged).

It is also noted that the solutions resulting from dilution will increase in pH with the degree of dilution, since the solvent has a considerably higher pH than standard electrolyte is adjusted to initially.

Positive electrolyte:

The standard electrolyte from above represents SOC = 0. In addition, a solution containing only $Fe^{3+}$ with the same concentration of 2.5 mol/L was prepared at pH = 0 to 0.3 by dissolving $Fe_3Cl$ in 2 mol ammonium-chloride, 0.01 mol hydrochloric-acid aqueous solution and subsequently adjusting the pH.

To produce positive electrolyte at varying SOC, this solution with only $Fe^{3+}$ (SOC = 1) was combined with the standard electrolyte in the desired $Fe^{3+}/Fe^{2+}$ ratios.

UV-Vis measurements:

Since these experiments were part of a preliminary assessment, only one sample was prepared for each solution and only one measurement carried out, respectively.

UV-Vis measurements were carried out using a Mettler-Toledo UV5 table-top spectrometer and quartz cuvettes (Mettler-Toledo, Art. No. 30675051) with 1 cm optical path-lengths. The spectrometer operates only in transmittance or absorbance mode. For each series of measurements a reference spectrum ($I_0$ in the formula below) was recorded. Measurements were carried out between 200 and 1100 nm in absorbance mode with a scan-time of 1 s.

Data processing:

Spectral data from the spectrometer in absorbance mode come already pre-processed as absorbance $A(\lambda)$ according to the Lambert-Beer-Law

$$A(\lambda) = -log_{10}(I/I_0) = \epsilon \cdot c \cdot l$$

where $I_0$ is the intensity measured through a reference solution, $I$ the intensity measured through the analyte, $\epsilon$ the absorptivity, $c$ the concentration of the analyte and $l$ the optical path-length through the analyte.

For the discussion of results, the absorbance $A$ as a function of wavelength $\lambda$ as defined above will be referred to as "absorbance spectrum" or "spectral response" synonymously.

Reference spectra:

To estimate solvent absorbance we measured the spectral response of $NH_4Cl$ with distilled water as $I_0$. All other absorbance spectra reported in this document were measured with the spectral response of $NH_4Cl$ as $I_0$.

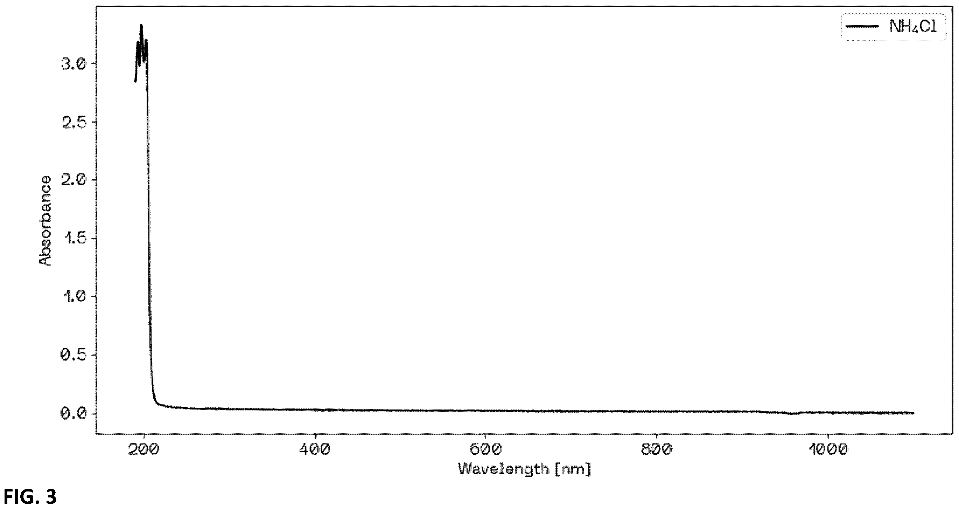

Fig. 3 shows the absorbance spectrum of 2 mol/L $NH_4Cl$ and 0.01 mol/L $HCl$ in aqueous solution measured with distilled water (DI-water) as reference.

As apparent from Fig. 3, the solvent by itself exhibits very little absorbance in almost the entire measured spectral range. Only at very short wavelengths (< 215 nm) a sharp increase in absorbance is observed.

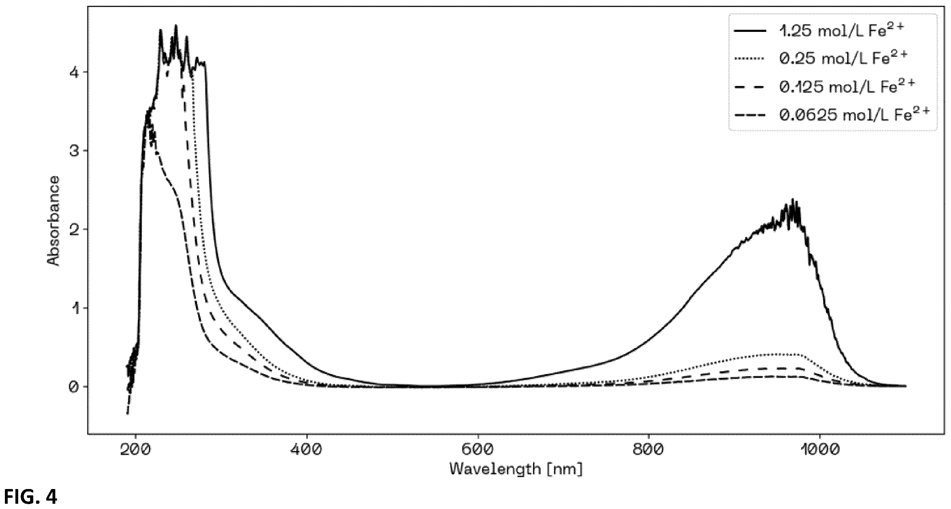

Fig. 4 shows the absorbance spectra of standard electrolyte with varying concentration of $Fe^{2+}$.

Negative electrolyte

Variation of iron-concentration ($Fe^{2+}$)

Fig. 4 shows the results obtained from the standard electrolyte containing only $Fe^{2+}$ at different concentrations. Two distinct spectral features can be identified and clearly correlated with the $Fe^{2+}$-concentration. Firstly, a strong absorbance-band in the UV range between 200 and 400 nm can be observed that expands towards 400 nm with increasing concentration. The high absorbance values around and above 4 indicate that barely any light reaches the detector for those wavelengths. Secondly, a prominent absorbance peak with an onset at around 800 nm and spanning to 1000 nm is seen.

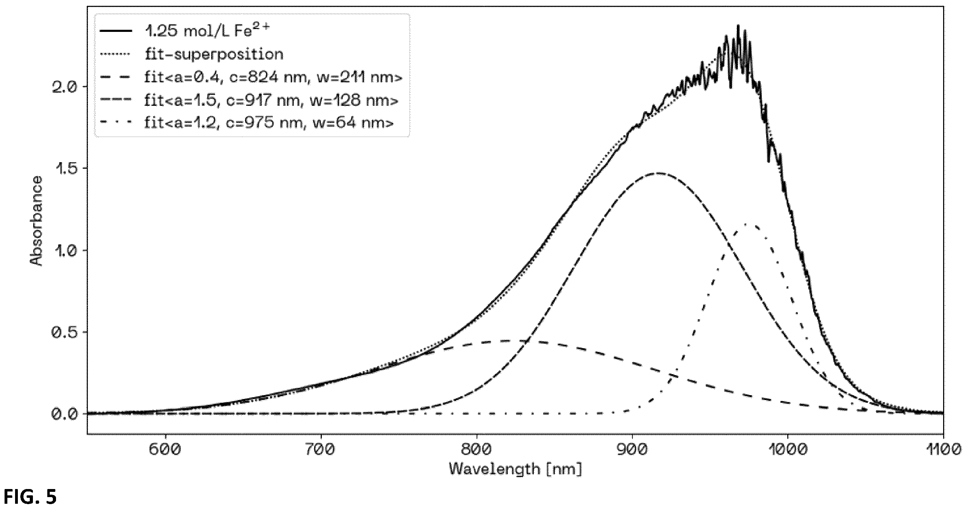

Fig. 5 shows the deconvolution of $Fe^{2+}$-absorbance-peak by fitting a superposition of Gaussian peaks to the data. The fit parameters for each Gaussian were a: amplitude, c: center-wavelength and w: full-width-at-half-maximum.

The more detailed analysis of Fig. 5 shows that the peak can be approximated very well by a superposition of four Gaussians with center positions at 742, 876, 946 and 979 nm.

The identified component peaks offer a good starting point for wavelength selection (ranges around these values) with regards to optical sensing of $Fe^{2+}$-concentration.

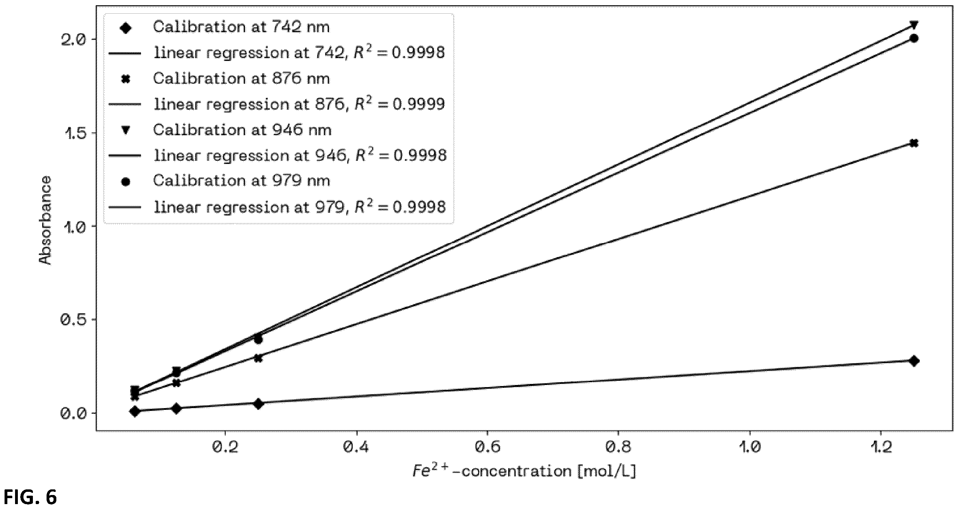

Fig. 6 shows the calibration of absorbance values as a function of $Fe^{2+}$-concentration at different wavelengths.

As shown in Fig. 6, absorbance values at specific wavelengths can be extracted to simulate in first approximation the signal that can be obtained from an inline sensor on the negative side of the ISB.

It can be seen from the graphs in Fig. 6 that linear regression analysis of data extracted at each of the identified wavelengths yields a high quality linear relationship between absorbance value and $Fe^{2+}$-concentration and thus state of charge (SOC). This also demonstrates how the sensitivity of the measurement to changes in concentration can be altered significantly by changing the analysis-wavelength.

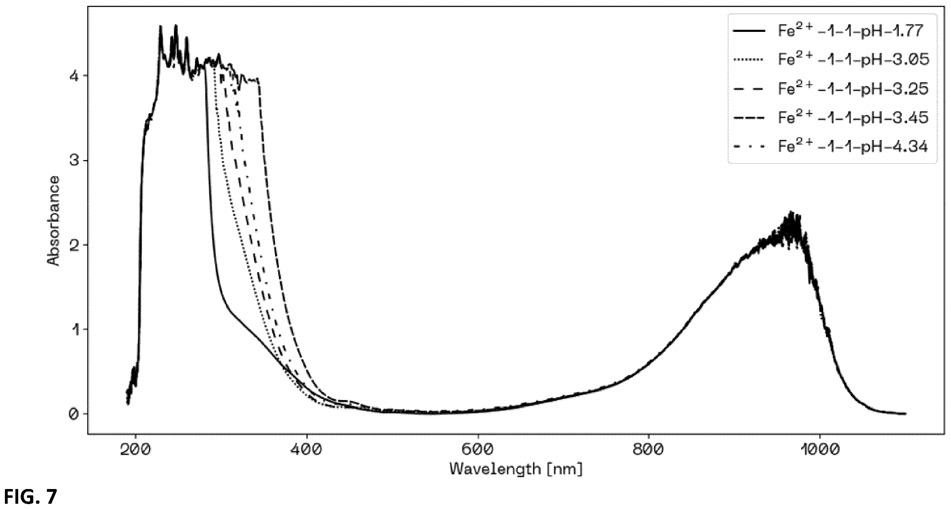

Fig. 7 shows absorbance spectra of negative electrolyte (1.25 mol/L) at varying pH from 200 to 1100 nm.

pH variation

Fig. 7 shows the results obtained from varying the pH of negative electrolyte at a fixed $Fe^{2+}$-concentration of 1.25 mol/L. There are clear changes in the absorbance spectra between measurements observable in the wavelength range between 300 and 500 nm, but it is difficult to infer a clear tendency as a function of pH on the basis of this dataset.

One observation that can be drawn from this experiment though is that the main absorbance peak identified and associated with $Fe^{2+}$ in the previous section does not seem to be affected by changes in pH. If that assumption can be confirmed, this alone would significantly improve the feasibility of optically measuring SOC (represented by the $Fe^{2+}$) in the negative side of the ISB.

Positive Electrolyte

As described above, the positive electrolyte for the purpose of this document consists of mixtures of standard electrolyte containing only $Fe^{2+}$ and a secondary solution containing only $Fe^{3+}$. In a first step the spectral response of said secondary solution was investigated to be able to compare the effects of $Fe^{3+}$ individually with the results discussed in the previous section.

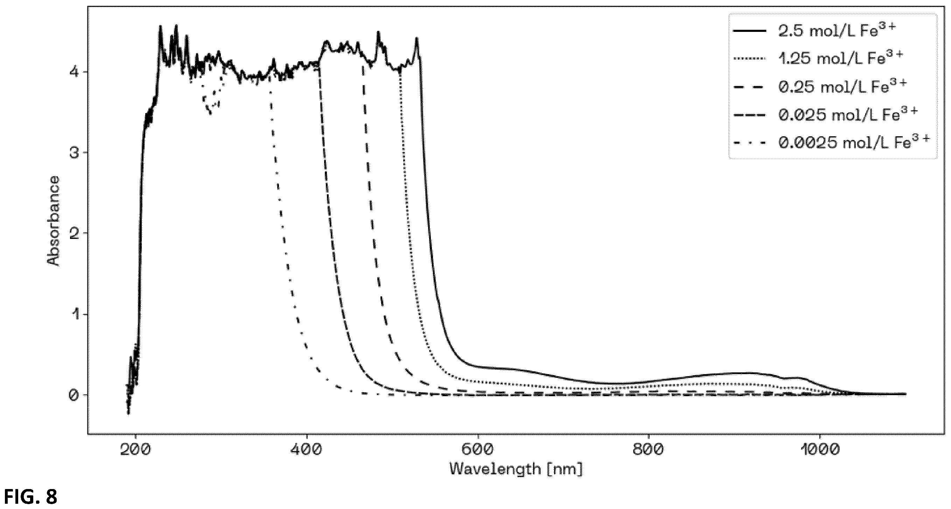

Fig. 8 shows absorbance spectra of $Fe^{3+}$-solution with varying concentration.

Variation of iron-concentration ($Fe^{3+}$)

Fig. 8 shows the results obtained from the secondary electrolyte-solution containing only $Fe^{3+}$ at different concentrations. Again there are several spectral features worth noting.

The most prominent is an even broader absorption band at short wavelengths than observed for the $Fe^{2+}$-solution that spans from 200 nm to almost 600 nm for the un-diluted solution ($c_{Fe3}+$ = 2.5 mol/L). Further, several much smaller but also very broad absorbance bands can be identified roughly around 650, 920 and 980 nm. An attempt at peak deconvolution as performed above did not yield any meaningful results due to the saturated signal below 600 nm.

What can be stated however is that these features essentially span the whole UV-Vis spectrum and clearly also overlap with the absorbance band associated with the $Fe^{2+}$-species (Fig. 5) between 800 and 1000 nm.

As a result, any signal obtained with an optical sensor on the positive side of the ISB will contain a superposition of effects from $Fe^{3+}$-species and $Fe^{2+}$-species.

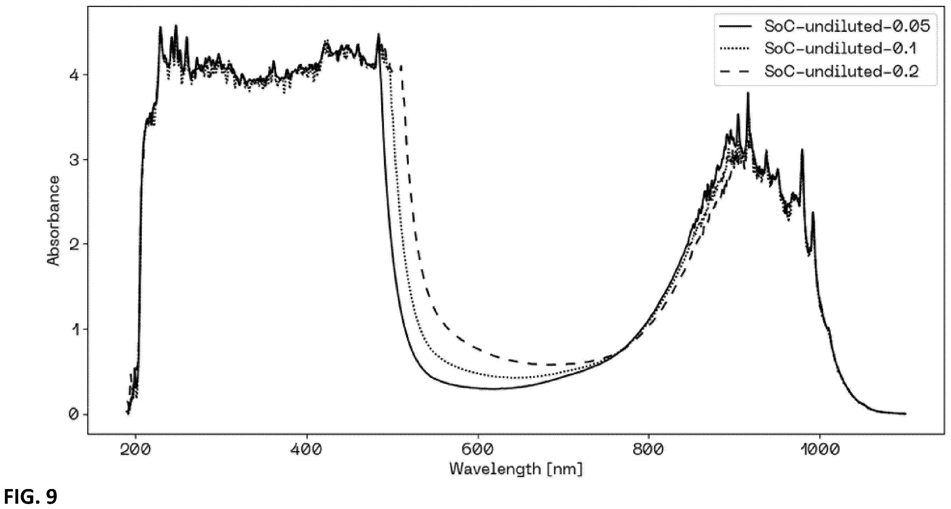

Fig. 9 shows absorbance spectra of undiluted positive electrolyte (2.5 mol/L) at different SOCs.

Variation of composition (SOC)

Having examined the spectral features of $Fe^{2+}$ and $Fe^{3+}$ individually, following the results from the combined response in the positive electrolyte are shown.

Undiluted electrolyte.

The results obtained with undiluted positive electrolyte (2.5 mol/L) are shown in Fig. 9.

Although the presented spectra were obtained at rather low SOCs only (due to the difficulty of preparing stable mixtures in this pH range (pH > 1) and concentration), it can be seen here that the spectral response at shorter wavelengths (left hand side of the graph) pretty much mirrors the results observed from the pure $Fe^{3+}$-solution (Fig. 8), while the behavior for longer wavelengths (right hand side of the graph) is dominated by the $Fe^{2+}$-peak from Fig. 5. The noise level on said peak suggests that the signal in this range is very close to saturation. Nevertheless it should be noted that the shrinking of the whole peak with decreasing $Fe^{2+}$-concentration can only be observed marginally at its left flank (800 to 900 nm).

In the central part of the graph (550 to 800 nm) a higher overall absorbance level can be observed due to the superposition of effects from $Fe^{3+}$ and $Fe^{2+}$. This extent of overlap of the spectral features makes it hard to determine the ratio and/or measure the individual levels. There is virtually no part of the spectrum that could serve as a reference point to extrapolate the relative composition and with that the SOC.

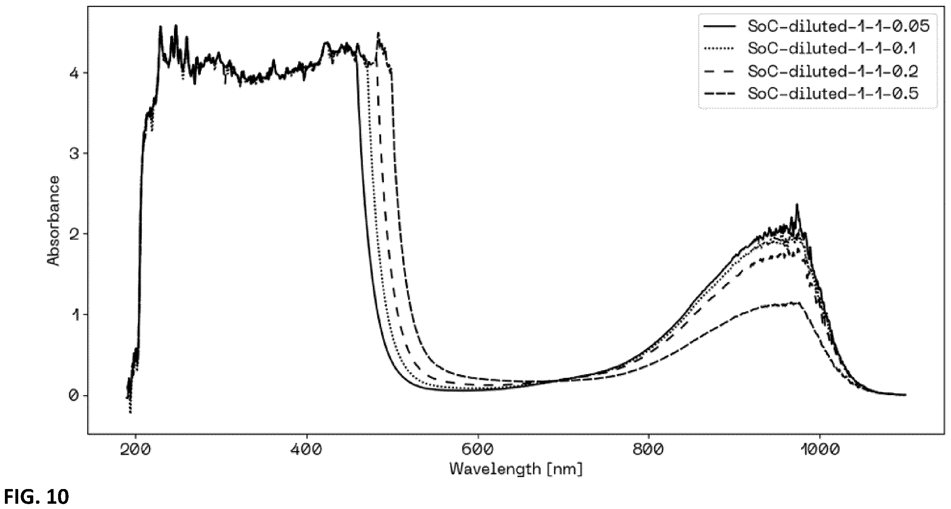

Fig. 10 shows absorbance spectra of positive electrolyte at varying SOC diluted 1:1 with solvent.

Electrolyte diluted 1:1.

From the results in previous sections it can be seen that by diluting the electrolyte to obtain half the concentration of iron-species cleaner and less correlated spectral features can be obtained. A similar effect should be achievable using an inline sensor with half the optical path length.

A dilution of 1:1 means that the base-electrolyte (only $Fe^{2+}$) as well the $Fe^{3+}$-only solution were at a concentration of 1.25 Mol/L prior to mixing them in the relation represented by the percentages at the end of the labels, respectively. Here, an SOC of 0.1 means that 10% of the iron species in the mixed solution were in oxidation state $Fe^{3+}$, while the other 90% were $Fe^{2+}$, and so forth.

The results obtained from the diluted samples are shown in Fig. 10. One can see that indeed the moving flank on the left side of the spectrum decreases more sharply as compared to the graphs in Fig. 9.

On the right hand side the $Fe^{2+}$-peak is much less noisy, but most notably values decrease with increasing SOC for the whole peak now. Even between 5% (full line) and 10% SOC (dotted line) there is now a clear value difference, which suggests that the peaks associated with $Fe^{3+}$ are not as relevant in this part of spectrum as with un-diluted electrolyte. This would facilitate detecting changes in SOC with an earlier onset.

In the central part of the graph one can observe that the inflection point of the curves between competing effects has shifted considerably to the left and is now situated around 700 nm. Also, the absorbance values around 600 nm seem to approach zero absorbance the lower the $Fe^{3+}$-percentage, indicating a lot less overlap overall.

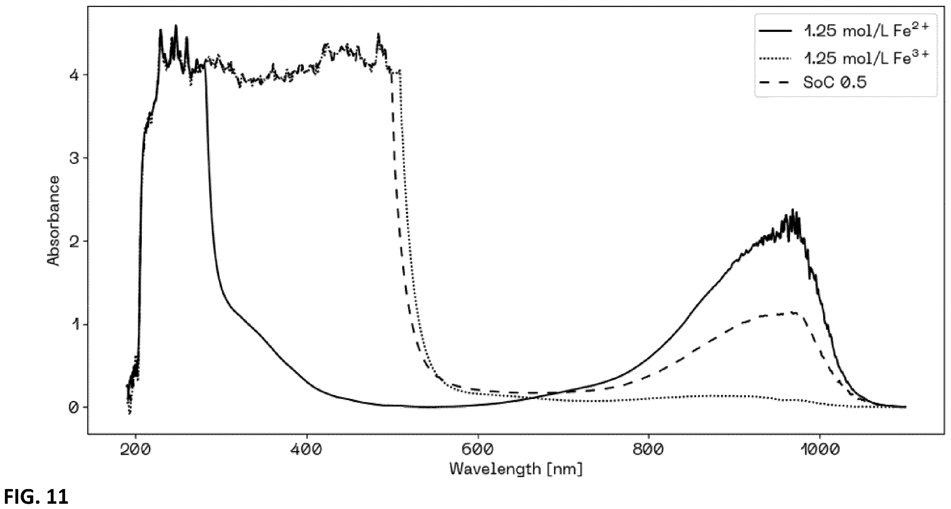

Fig. 11 shows a comparison of absorbance spectra of positive electrolyte at SOC of 0.5 and base-solutions at concentrations of 1.25 mol/L, respectively.

To make the superposition of spectral features in these results more apparent and better appreciate the complexity of this optical system, in Fig. 11 the individual $Fe^{2+}$- and $Fe^{3+}$-spectra from the previous sections at the same concentration are compared with the solution combining the two in equal parts.

This comparison shows very clearly that the $Fe^{3+}$-absorption below 550 nm is hugely underestimated in this representation and the absorbance values saturated. Even though the dashed line represents a 50:50 combination of the other two solutions, the graph follows almost exclusively that of the $Fe^{3+}$-solution in that range. From around 580 nm to 1000 nm, the spectral response of the combined solution is much more the result of equal contributions. Especially the $Fe^{2+}$-peak between 800 and 1000 nm is very close to being reduced by half as one would expect.

A closer look at the central region between 580 and 800 nm to either side of the crossing-point of the graphs of the individual solutions shows: The combined solution (dashed line) yields slightly higher values than the $Fe^{3+}$-solution by itself (dotted line) on the left and clearly lower values than the $Fe^{2+}$-solution by itself (dashed line) on the right. This clearly shows how effects from both solutions are still superposed here even with the concentration reduced by half.

The embodiments are only exemplary and the full scope of the present invention is defined by the claims.

## Claims

1. Sensor for an iron salt battery, ISB, the sensor comprising:

   a light emitting device (10) configured to emit light at one or more wavelengths in the UV-Vis-IR range or one or more sub-ranges within the UV-Vis-IR range;
   a light detecting device (20) configured to detect light emitted by the light emitting device and having passed through ISB electrolyte (60); and
   an analyzing device (40) configured to determine at least one of a Fe(II) concentration, a Fe(III) concentration, or a ratio of Fe(III)/Fe(II) concentrations of the ISB electrolyte based on an intensity of the light emitted by the light emitting device and an intensity of the light detected by the light detecting device.

2. Sensor according to claim 1, wherein the analyzing device is configured to receive a signal from the light emitting device corresponding to the light intensity emitted by the light emitting device and a signal from the light detecting device corresponding to the light intensity detected by the light detecting device; or

   the analyzing device is configured to send a signal to the light emitting device to trigger light emission with a specific intensity and wavelength and to receive a signal from the light detecting device corresponding to the light intensity detected by the light detecting device; and/or
   the analyzing device is configured to receive a reference signal corresponding to the detected light intensity when the ISB is discharged or fully charged.

3. Sensor according to claim 1 or 2, wherein the analyzing device is configured to determine the Fe(II) concentration based on light having a wavelength of at least one of $742\pm77.5$, $876\pm68$, $946\pm53$ and $979\pm27.5$ nm and for each wavelength a respective linear relationship between an absorbance value and the Fe(II) concentration, wherein the absorbance value is calculated based on the light intensity detected by the light detecting device.

4. Sensor according to claim 3, wherein the light detecting device is configured to detect light having passed through negative ISB electrolyte.

5. Sensor according to any one of claims 1 to 4, wherein the analyzing device is configured to determine the Fe(III) concentration based on a light wavelength at which an absorbance spectrum drops from a saturated value to lower values at greater wavelengths, in particular between 400 and 600 nm.

6. Sensor according to any one of claims 1 to 5, wherein the light emitting device and the light detecting device are configured to be arranged on opposite sides of a transparent flow line for the ISB electrolyte.

7. Sensor according to any one of claims 1 to 6, further comprising another light detecting device arranged on the same side of a transparent flow line for the ISB electrolyte as is the light emitting device, wherein at least a portion of the light emitted by the light emitting device is reflected within a wall of the transparent flow line due to total internal reflection, and said other light detecting device is configured to detect at least a portion of the internally reflected light, or further comprising another light emitting device arranged on the same side of the transparent flow line for the ISB electrolyte as is the light detecting device, wherein at least a portion of the light emitted by said other light emitting device is reflected within a wall of the transparent flow line due to total internal reflection, and the light detecting device is configured to detect at least a portion of the internally reflected light.

8. Sensor according to claim 7, wherein the sensor is configured to determine a refractive index of the ISB electrolyte or a relative change thereof, and optionally further configured to determine a pH value of the ISB electrolyte based on the determined refractive index of the ISB electrolyte.

9. Sensor according to any one of claims 1 to 8, wherein the light emitting device is configured to emit white light and the light detecting device is configured to detect light of selected one or more particular wavelengths.

10. Sensor according to any one of claims 1 to 8, wherein the light emitting device is configured to emit selected one or more particular wavelengths and the light detecting device is configured to detect light of the selected one or more particular wavelengths;

   wherein, optionally the intensity of the light emitting device(s) can be adjusted to fit the range of the light detecting device(s); and/or
   Wherein, optionally, the integration time of the light detecting device(s) can be adjusted to fit the intensity of the light emitting device(s).

11. Method, comprising:

   emitting light at one or more wavelengths in the UV-Vis-IR range or one or more sub-ranges within the UV-Vis-IR range;
   detecting emitted light having passed through ISB electrolyte; and
   determining at least one of a Fe(II) concentration, a Fe(III) concentration, or a ratio of Fe(III)/Fe(II) concentrations of the ISB electrolyte based on an intensity of the emitted light and an intensity of the detected light.

12. Method according to claim 11, comprising receiving a signal corresponding to the detected light intensity and a signal corresponding to the emitted light intensity ; and/or
   receiving a signal corresponding to the detected light intensity and a reference signal corresponding to the detected light intensity when the ISB is discharged or fully charged.

13. Method according to claim 11 or 12, further comprising determining the Fe(II) concentration based on light having a wavelength of at least one of $742\pm77.5$, $876\pm68$, $946\pm53$ and $979\pm27.5$ nm and for each wavelength a respective relationship between an absorbance value and the Fe(II) concentration, wherein the absorbance value is calculated based on the detected light intensity and a reference intensity.

14. Method according to any one of claims 11 to 13, further comprising determining the Fe(III) concentration based on a light wavelength at which an absorbance spectrum drops from a saturated value to lower values at greater wavelengths, in particular between 400 and 600 nm.

15. Method according to any one of claims 11 to 14, further comprising:

   emitting white light and detecting light of selected one or more particular wavelengths; or
   emitting selected one or more particular wavelengths and detecting light of the one or more selected particular

wavelengths.

FIG. 1

**FIG. 2**

FIG. 3

**FIG. 4**

EP 4 726 368 A1

**FIG. 5**

EP 4 726 368 A1

**FIG. 6**

**FIG. 7**

FIG. 8

**FIG. 9**

**FIG. 10**

EP 4 726 368 A1

**FIG. 11**

EP 4 726 368 A1

Europäisches
Patentamt

European
Patent Office

Office européen
des brevets

## EUROPEAN SEARCH REPORT

**Application Number**

EP 24 20 6014

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/097172 A1 (ZHAO DI [US] ET AL) 21 March 2024 (2024-03-21) | 1,4,6, 10,11,15 | INV. G01N21/31 |
| Y | * paragraphs [0015] - [0019], [0044], [0047] - [0049]; figures 1,2 * | 2,3,5,9, 12-14 | G01N21/43 H01M8/18 |
| A | | 7,8 | G01N21/3577 H01M8/04186 |
| Y | US 2008/193828 A1 (SAHU SAROJ KUMAR [US]) 14 August 2008 (2008-08-14) * paragraphs [0024], [0120]; figures 6B,7 * | 2,3,6,9, 12,13 | G01N21/359 G01N21/41 |
| Y | DE 10 2012 006776 A1 (BOZANKAYA BC & C [DE]) 10 October 2013 (2013-10-10) * paragraph [0074] * | 6 | |
| Y | EP 4 280 323 A1 (VOLTSTORAGE GMBH [DE]) 22 November 2023 (2023-11-22) * paragraph [0057] * | 2,5,12, 14 | |
| A | US 2018/013164 A1 (EVANS CRAIG E [US] ET AL) 11 January 2018 (2018-01-11) * paragraphs [0046] - [0048] * | 1-15 | TECHNICAL FIELDS SEARCHED (IPC) |
| A | WO 2015/066398 A1 (LOCK HEED MARTIN ADVANCED ENERGY STORAGE LLC [US]) 7 May 2015 (2015-05-07) * paragraph [0005] * | 1-15 | G01N H01M |
| A | US 2016/164125 A1 (PIJPERS JOSEPH JOHANNES HENRICUS [US]) 9 June 2016 (2016-06-09) * paragraph [0103]; figures 1,3 * | 1-15 | |
| A | CN 102 621 078 A (UNIV TSINGHUA GRADUATE SCHOOL) 1 August 2012 (2012-08-01) * figure 4 * | 1-15 | |

The present search report has been drawn up for all claims

| Place of search | Date of completion of the search | Examiner |
|---|---|---|
| Munich | 3 March 2025 | Meacher, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 6014

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2025

| Patent document cited in search report | Publication date | Patent family member(s) | Publication date |
|---|---|---|---|
| US 2024097172 A1 | 21-03-2024 | US 2024097172 A1 | 21-03-2024 |
| | | WO 2024059504 A1 | 21-03-2024 |
| US 2008193828 A1 | 14-08-2008 | CN 101657922 A | 24-02-2010 |
| | | EP 2122727 A1 | 25-11-2009 |
| | | US 2008193828 A1 | 14-08-2008 |
| | | WO 2008100862 A1 | 21-08-2008 |
| DE 102012006776 A1 | 10-10-2013 | DE 102012006776 A1 | 10-10-2013 |
| | | EP 2648258 A1 | 09-10-2013 |
| EP 4280323 A1 | 22-11-2023 | AU 2023271214 A1 | 19-12-2024 |
| | | EP 4280323 A1 | 22-11-2023 |
| | | WO 2023222306 A1 | 23-11-2023 |
| US 2018013164 A1 | 11-01-2018 | US 2014272493 A1 | 18-09-2014 |
| | | US 2018013164 A1 | 11-01-2018 |
| WO 2015066398 A1 | 07-05-2015 | CA 2927793 A1 | 07-05-2015 |
| | | CN 105993091 A | 05-10-2016 |
| | | DK 3063820 T3 | 14-12-2020 |
| | | EP 3063820 A1 | 07-09-2016 |
| | | ES 2837836 T3 | 01-07-2021 |
| | | JP 6685901 B2 | 22-04-2020 |
| | | JP 2016535405 A | 10-11-2016 |
| | | KR 20160081928 A | 08-07-2016 |
| | | PL 3063820 T3 | 14-06-2021 |
| | | US 2016293979 A1 | 06-10-2016 |
| | | US 2020381751 A1 | 03-12-2020 |
| | | US 2024113313 A1 | 04-04-2024 |
| | | WO 2015066398 A1 | 07-05-2015 |
| US 2016164125 A1 | 09-06-2016 | CA 2967458 A1 | 16-06-2016 |
| | | CN 107148570 A | 08-09-2017 |
| | | EP 3230724 A2 | 18-10-2017 |
| | | JP 2018504614 A | 15-02-2018 |
| | | KR 20170092633 A | 11-08-2017 |
| | | US 2016164125 A1 | 09-06-2016 |
| | | WO 2016094436 A2 | 16-06-2016 |
| CN 102621078 A | 01-08-2012 | CN 102621078 A | 01-08-2012 |
| | | HK 1169857 A1 | 08-02-2013 |

EPO FORM P0459

For more details about this annex : see Official Journal of the European Patent Office, No. 12/82